# EUROPEAN PATENT SPECIFICATION

(11) **EP 4 001 058 B1**
(45) Date of publication and mention of the grant of the patent: **09.07.2025**
(21) Application number: 20207061.1
(22) Date of filing: 12.11.2020
(51) Int. Cl.: B62D 15/02, G06T 7/73, B60L 50/16, A01B 69/00, G06V 20/58

(54) **A SYSTEM FOR GUIDING A VEHICLE TOWARDS A CONNECTING VEHICLE WHICH IS TO BE CONNECTED TO THE VEHICLE**
SYSTEM ZUM FÜHREN EINES FAHRZEUGS ZU EINEM MIT DEM FAHRZEUG ZU VERBINDENDEN VERBINDUNGSFAHRZEUG
SYSTÈME DE GUIDAGE D'UN VÉHICULE VERS UN VÉHICULE DE LIAISON QUI DOIT ÊTRE RELIÉ AU VÉHICULE

(43) Date of publication of application: 25.05.2022
(73) Proprietor: VOLVO TRUCK CORPORATION, 405 08 Göteborg (SE)
(72) Inventor: PERSSON, Daniel, 413 21 Göteborg (SE); JOHANSSON, Daniel, 413 20 Göteborg (SE)
(74) Representative: Kransell & Wennborg KB

(56) References cited:
- EP-A1- 2 634 070
- EP-A1- 3 624 578
- WO-A1-2011/158107
- US-A1- 2020 039 517

## Description

### TECHNICAL FIELD

The invention relates to a system for guiding a vehicle towards a connecting vehicle which is to be connected to the vehicle. The invention also relates to a vehicle, a vehicle combination, a method for guiding a vehicle towards a connecting vehicle which is to be connected to the vehicle, a computer program, a computer readable medium and to a control unit for controlling a vehicle.

The invention can be applied in heavy-duty vehicles, such as trucks, buses and construction equipment. Although the invention will be described with respect to a truck and a truck vehicle combination in the form of a towing vehicle and semi-trailer, the invention is not restricted to this particular vehicle/vehicle combination, but may also be used in other vehicles such as passenger cars which are connectable to a trailer.

### BACKGROUND

A towing vehicle, such as towing truck for towing trailers, may be difficult to guide by a driver during a connection procedure. For example, the truck typically needs to be reversed towards the connecting trailer and during the reversing the driver makes use of the truck's rear mirrors to guide the vehicle towards a trailer coupling point, e.g. a kingpin. This is usually difficult and therefore requires that the driver is experienced.

In order to support a driver, it has been suggested to provide driving assistance systems adapted for reversing a vehicle towards a connecting vehicle. For example, US2020/0262257 A1 discloses a system for locating and/or identifying a trailer with a trailer control device. It further discloses a coupling process for supporting a driver to couple a traction vehicle to a located trailer. The coupling process utilizes a rearward looking camera to identify a detectable pattern on a coupling side of the trailer. Further, the pattern comprises three points provided in a triangle, whereby a distance and/or an angle between the traction vehicle and the trailer are determined by use of triangulation of the detected points.

Even though the above-mentioned system provides support for a driver when coupling a vehicle to a connecting vehicle, there is still a strive to develop further improved driver assistance systems and/or fully automated systems configured for guiding a vehicle towards a connecting vehicle.

According to its abstract, EP 2634070 A1, which discloses in particular the features of the preamble of claims 1 and 15, relates to a system which has a camera arranged at a rear part of a motor vehicle for detecting rear environment of the vehicle. A characteristic marker is movably mounted at a stationary object such that information about a geometry of the characteristic mark is stored in an image processing apparatus. The image processing apparatus compares an image transmitted from the camera with the stored characteristic marker at the stationary object and determines position information of the vehicle relative to the stationary object based on the comparison result.

According to its abstract, EP 3624578 A1 relates to a system for automatic connection between a tractor provided with a connection point and an implement provided with at least one hitch comprising: a 3D camera carried by the tractor and configured to continuously take images of the three-dimensional space facing the implement; a processor configured to detect on the images a predetermined shape corresponding to the hitch of the implement and to determine the spatial coordinates of the hitch with respect to the position of the tractor in order to calculate a path between the tractor and the hitch. When the implement hitch moves out of the field-of-view of the camera the processor is configured to detect on the images alternative reference points to re-calculate the path.

### SUMMARY

An object of the invention is to provide an improved system for guiding a vehicle towards a connecting vehicle which is to be connected to the vehicle. Another object of the invention is to provide an improved vehicle, vehicle combination, method for guiding a vehicle towards a connecting vehicle, computer program, computer readable medium and/or control unit for controlling a vehicle.

According to a first aspect of the invention, the object is achieved by a system according to claim 1. According to a second aspect of the invention, the object is achieved by a vehicle according to claim 11. According to a third aspect of the invention, the object is achieved by a vehicle combination according to claim 12. According to a fourth aspect of the invention, the object is achieved by a method according to claim 15. According to a fifth aspect of the invention, the object is achieved by a computer program according to claim 16. According to a sixth aspect of the invention, the object is achieved by a computer readable medium according to claim 17. According to a seventh aspect of the invention, the object is achieved by a control unit according to claim 18.

According to the first aspect, the object is achieved by a system for guiding a vehicle towards a connecting vehicle which is to be connected to the vehicle The system comprises:
- an image obtaining device configured to be mounted on the vehicle for obtaining an image of the connecting vehicle, wherein the system is configured to:
   - obtain an image from the image obtaining device;
   - in the obtained image, identify a marker which is provided on the connecting vehicle;
   - match the obtained image with at least one reference image, wherein the reference image contains a reference marker positioned at the same, or substantially the same, position as a position of the marker in the obtained image, wherein the position of the reference marker in the at least one reference image is associated with an actual stored location, and wherein the actual stored location corresponds to an actual location of the marker with respect to the vehicle; and wherein the system is further configured to:
      - guide the vehicle towards the connecting vehicle by use of the actual stored location.

The actual stored location(s) and the actual location(s) may be locations in a two-dimensional plane or locations in a three-dimensional space.

By the provision of the system as disclosed herein, an improved system is provided, implying a more accurate and reliable estimation of an actual location of the connecting vehicle with respect to the vehicle. As a consequence, the guiding of the vehicle towards the connecting vehicle may be improved, since more reliable/accurate data indicative of the actual location of the connecting vehicle may be utilized in e.g. a guiding algorithm for the vehicle. In particular, the present invention is based on a realization that an obtained image comprising a marker can be matched with at least one reference image comprising a reference marker. Accordingly, by matching the obtained image with a reference image in which a reference marker's position is the same, or substantially the same, as the position of the marker in the obtained image, an actual stored location associated with the reference image can be retrieved. This actual stored location in turn corresponds to an actual location of the marker with respect to the vehicle. Matching an image with another image may also be regarded as comparing an image with another image to find a match therebetween, wherein the match is found based on the positions of the marker and the reference marker in the respective images. The matching may be performed by matching data which is based on e.g. the at least one reference image. For example, the image(s) may be processed by e.g. a computer, providing a data set corresponding to at least one of the images. Accordingly, and optionally, matching the obtained image with at least one reference image as mentioned herein may also be regarded as matching the obtained image with reference data based on the at least one reference image.

Still further, the present invention may also imply a cost-effective system which requires less processing power and/or a system which in less time can obtain a value indicative of the actual location of the connecting vehicle. More specifically, instead of e.g. using complicated triangulation calculations in order to obtain an actual location of the connecting vehicle, image matching is utilized, implying a simplified and/or faster procedure requiring less processing power. This may also further improve the guiding since the actual stored location may be obtained more rapidly, reducing unwanted time lags caused by e.g. complicated calculations known from the prior art.

Optionally, the actual stored location may comprise an actual stored distance, and the system may further be configured to:
- match the obtained image with at least one reference image, wherein the reference image contains a reference marker having the same, or substantially the same, size as a size of the marker in the obtained image, wherein the size of the reference marker in the at least one reference image is associated with the actual stored distance, and wherein the actual stored distance corresponds to an actual distance of the marker with respect to the vehicle; and/or;
- count a number of pixels in the obtained image in which the marker is present, wherein the number of pixels is associated with the actual stored distance, wherein the actual stored distance corresponds to the actual distance of the marker with respect to the vehicle.

Accordingly, a position of the actual location may be provided in a three-dimensional space, including also a distance to the connecting vehicle with respect to the vehicle. Alternatively, or additionally, the system may also comprise a sensor which is configured to detect a distance to the connecting vehicle, which sensor may be any one of an ultrasonic sensor, a RADAR (radio detection and ranging), a LIDAR (light detection and ranging), a SONAR (sound navigation and ranging) or the like.

Optionally, the system may be configured to identify a marker having at least one predetermined property, such as marker size, marker shape, marker pattern, marker colour etc. By looking for a marker having a predetermined property, less processing power may be required and/or faster identification may be provided.

Optionally, the system may be configured to continuously obtain images, identify the marker in the obtained images and match the obtained images with reference images while the vehicle is guided towards the connecting vehicle, thereby continuously updating the actual stored location used for guiding the vehicle towards the connecting vehicle.

Optionally, the system may be configured to:
- in the obtained images, identify at least two different markers on the connecting vehicle while the vehicle is guided towards the connecting vehicle, and wherein the system is further configured to first guide the vehicle towards the connecting vehicle by use of a first one of the at least two different markers, and to subsequently guide the vehicle towards the connecting vehicle by use of a second one of the at least two different markers. An advantage of this configuration may be that the markers may be adapted to be identified at different distances from the vehicle, and thereby the accuracy of the guiding may be further improved. For example, the markers may have different sizes, where e.g. the first marker is larger than the second marker. Thereby it may be easier to identify the first marker from a longer distance, and the second smaller marker may be easier to identify once the vehicle is closer to the connecting vehicle. Accordingly, and optionally, the system may further be configured to switch from guiding of the vehicle by use of the first one to guiding of the vehicle by use of the second one of the at least two different markers when a predetermined condition is fulfilled, which predetermined condition is indicative of the vehicle being located at a specific distance from the connecting vehicle. Still optionally, the markers may be positioned at different locations on the connecting vehicle. For example, one marker may be positioned on a front side of the connecting vehicle facing forward in a longitudinal direction of the connecting vehicle. Another marker may be positioned closer to a coupling point of the connecting vehicle, such as a kingpin. For example, the marker positioned closer to the coupling point may be positioned on a surface facing downwardly towards the ground surface. This may imply improved guiding of the vehicle once the vehicle is close to the connecting vehicle, such as within 5 meters from the connecting vehicle, or when the image obtaining device is able to identify the marker which is provided on the downwardly facing surface.

Optionally, the at least one reference image may be obtained by taking an image by a reference image obtaining device, which image includes the reference marker, and wherein the reference marker is located at a known location from the reference image obtaining device, wherein a position of the reference marker in the image is associated with the known location, thereby providing the actual stored location. Accordingly, the at least one reference image may be obtained by taking one or more images, whereby the reference image obtaining device preferably should be located at a position corresponding to the position of the image obtaining device when mounted to the vehicle. The known location of the reference marker may e.g. be obtained by a human measuring a location of the reference marker with respect to the reference image obtaining device. As such, the at least one reference image is likely obtained from a real situation, but alternatively or additionally, the at least one reference image may also be obtained from a simulated/virtual situation created in a computer.

Optionally, the system may comprise and/or utilize a machine learning algorithm for continuously updating and/or adding actual stored locations of reference markers. An advantage of using a machine learning algorithm is that the guiding may thereby be improved during use of the system.

Optionally, the at least one reference image may be part of reference data comprising a plurality of reference images containing reference markers provided at different positions, wherein each position of the reference marker in each reference image is associated with an actual stored location. Accordingly, a database may be created including several reference images having reference markers provided at different positions in the images. Still optionally, additional actual stored locations may be provided by interpolation. For example, if a match is found in at least two reference images which have respective reference markers positioned at substantially the same position as the position of the marker in the obtained image, an interpolation may be performed between the at least two stored locations associated with the reference images. This implies a more complete database, which in turn may further improve the guiding of the vehicle. In addition, this also implies a more cost-effective system requiring less reference images.

Optionally, the system may be configured to determine a path for the vehicle towards the connecting vehicle by use of the actual stored location, wherein the vehicle is preferably guided towards the connecting vehicle by use of a lateral distance between a look ahead point provided behind the vehicle and the path.

According to the second aspect, the object is achieved by a vehicle comprising the system according to any one of the embodiments of the first aspect of the invention. Advantages and effects of the second aspect is largely analogous to advantages and effects of the first aspect of the invention. The vehicle may be a truck, a construction equipment vehicle, a bus or any other vehicle which can be connected to a connecting vehicle. The connecting vehicle may be any other vehicle, such as a trailer, semi-trailer or dolly.

The image obtaining device is preferably mounted on a rearward facing side of the vehicle, if a coupling point for the connecting vehicle is provided at a rear portion of the vehicle. Alternatively, if a coupling point for the connecting vehicle is provided at a front portion of the vehicle, the image obtaining device should rather be mounted on a forward facing side of the vehicle. Still further, the image obtaining device is preferably mounted at a position on the vehicle which corresponds to a mounted position of the reference image obtaining device when the at least one reference image was obtained. The mounting position is preferably a position in a two-dimensional plane corresponding to a lateral and height extension of the vehicle.

According to the third aspect, the object is achieved by a vehicle combination comprising the vehicle according to the second aspect of the invention and a connecting vehicle, wherein the connecting vehicle comprises at least one marker identifiable by the image obtaining device. Advantages and effects of the third aspect is largely analogous to advantages and effects of the first and second aspects of the invention. The connecting vehicle also comprises a coupling point, such as a kingpin, whereby the vehicle is preferably guided towards the coupling point on the connecting vehicle. As such, the marker is preferably provided close to the coupling point, such as on a forward-facing side of the connecting vehicle or on a downwardly facing side of the connecting vehicle.

Still optionally, the connecting vehicle may comprise at least two different markers. These markers may be positioned and/or used as described herein in order to improve the guiding of the vehicle towards the connecting vehicle and/or towards the connecting vehicle and its coupling point. For example, one of the markers may be provided at a front side face of the connecting vehicle proximate a coupling point of the connecting vehicle, and a second one of the markers may be provided at a downwardly facing side of the connecting vehicle proximate the coupling point. The second one of the markers is preferably provided closer to the coupling point than the first one of the markers.

According to the fourth aspect, the object is achieved by a method for guiding a vehicle towards a connecting vehicle which is to be connected to the vehicle, wherein the vehicle comprises an image obtaining device configured to be mounted on the vehicle for obtaining an image of the connecting vehicle, wherein the method comprises:
- obtaining an image from the image obtaining device;
- in the obtained image, identifying a marker which is provided on the connecting vehicle;
- matching the obtained image with at least one reference image, wherein the reference image contains a reference marker positioned at the same, or substantially the same, position as a position of the marker in the obtained image, wherein the position of the reference marker in the at least one reference image is associated with an actual stored location, and wherein the actual stored location corresponds to an actual location of the marker with respect to the vehicle; and wherein the method further comprises:
   - guiding the vehicle towards the connecting vehicle by use of the information of the actual stored location.

Advantages and effects of the method are largely analogous to the advantages effects of the system. Further, all embodiments of the fourth aspect of the invention are combinable with all embodiments of the first aspect of the invention and vice versa.

Optionally, the actual stored location comprises an actual stored distance, and the method further comprises:
- matching the obtained image with at least one reference image, wherein the reference image contains a reference marker having the same, or substantially the same, size as a size of the marker in the obtained image, wherein the size of the reference marker in the at least one reference image is associated with the actual stored distance, and wherein the actual stored distance corresponds to an actual distance of the marker with respect to the vehicle; and/or;
- counting a number of pixels in the obtained image in which the marker is present, wherein the number of pixels is associated with the actual stored distance, wherein the actual stored distance corresponds to the actual distance of the marker with respect to the vehicle.

Optionally, the method may comprise identifying a marker having at least one predetermined property, such as marker size, marker shape, marker pattern, marker colour etc.

Optionally, the method may further comprise to continuously obtaining images, identifying the marker in the obtained images and matching the obtained images with reference images while the vehicle is guided towards the connecting vehicle, thereby continuously updating the actual stored location used for guiding the vehicle towards the connecting vehicle.

Optionally, the method may further comprise:
- in the obtained images, identifying at least two different markers on the connecting vehicle while the vehicle is guided towards the connecting vehicle, wherein the method further comprises: first guiding the vehicle towards the connecting vehicle by use of a first one of the at least two different markers, and subsequently guiding the vehicle towards the connecting vehicle by use of a second one of the at least two different markers.

Optionally, the method may switch from guiding of the vehicle by use of the first one to guiding of the vehicle by use of the second one of the at least two different markers when a predetermined condition is fulfilled, which predetermined condition is indicative of the vehicle being located at a specific distance from the connecting vehicle.

Optionally, the at least one reference image may be obtained by taking an image by a reference image obtaining device, which image includes the reference marker, wherein the reference marker is located at a known location from the reference image obtaining device, wherein a position of the reference marker in the image is associated with the known location, thereby providing the actual stored location.

Optionally, the method may utilize a machine learning algorithm for continuously updating and/or adding actual stored locations of reference markers.

Optionally, the at least one reference image may be part of reference data comprising a plurality of reference images containing reference markers provided at different positions, wherein each position of the reference marker in the respective reference image is associated with an actual stored location.

Optionally, the method may determine a path for the vehicle towards the connecting vehicle by use of the actual stored location, wherein the vehicle is preferably guided towards the connecting vehicle by use of a lateral distance between a look ahead point provided behind the vehicle and the path.

According to the fifth aspect, the object is achieved by a computer program comprising program code means for performing the steps of the method when said program is run on a computer. According to the sixth aspect, the object is achieved by a computer readable medium carrying a computer program comprising program code means for performing the steps of the method when said program product is run on a computer. According to the seventh aspect, the object is achieved by a control unit for controlling a vehicle, the control unit being configured to perform the steps of the method.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
Figs. 1a-b are a perspective views of a vehicle and a connecting vehicle according to an example embodiment of the present invention;
Fig. 2 is a shematic illustration of two images which are matched according to an example embodiment of the present invention;
Fig. 3 is a schematic view from above of a vehicle which is reversed towards a connecting vehicle according to an example embodiment of the present invention;
Fig. 4 is a schematic illustration of an image where markers at different distances from an image obtaining device have been captured in the image;
Fig. 5 is a flowchart of a method according to an example embodiment of the present invention; and
Fig. 6 is a schematic illustration of a system according to an example embodiment of the present invention.

The drawings show diagrammatic exemplifying embodiments of the present invention and are thus not necessarily drawn to scale. It shall be understood that the embodiments shown and described are exemplifying and that the invention is not limited to these embodiments. It shall also be noted that some details in the drawings may be exaggerated in order to better describe and illustrate the invention. Like reference characters refer to like elements throughout the description, unless expressed otherwise.

### DETAILED DESCRIPTION OF EXAMPLE EMBODIMENTS OF THE INVENTION

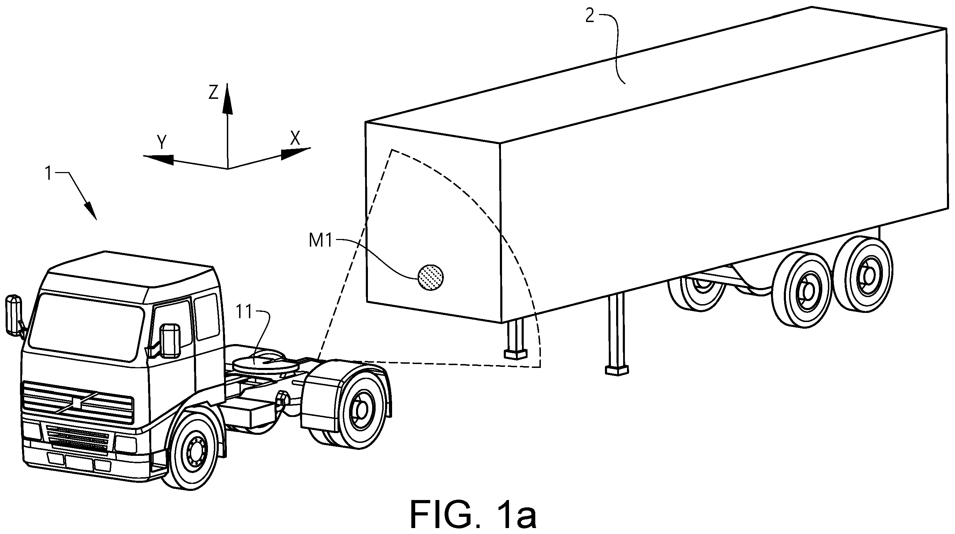

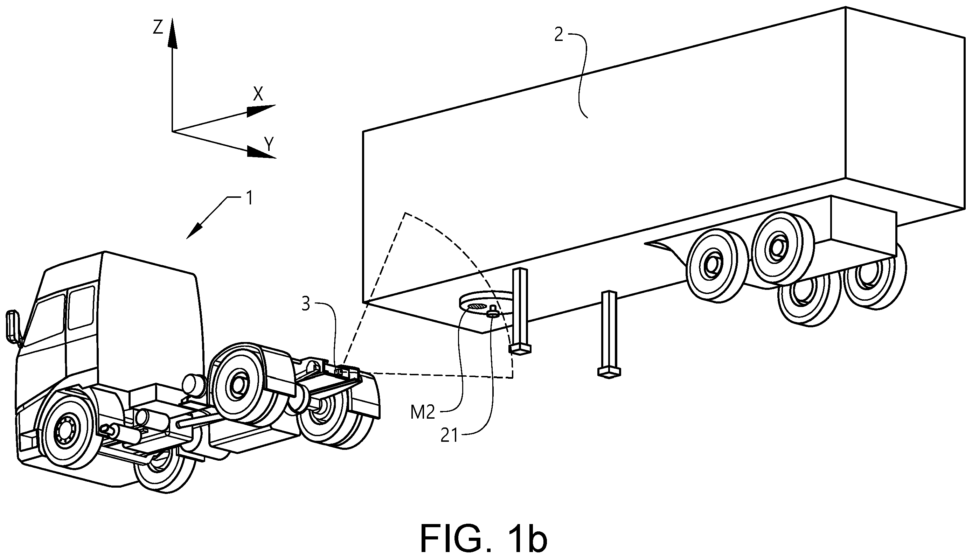

In figs. 1a and 1b a vehicle 1 and a connecting vehicle 2 according to an example embodiment of the present invention is shown in two perspective views. The vehicle 1 is here a towing truck and the connecting vehicle 2 is a so called semi-trailer having a coupling point 21 in the form of a kingpin. The towing truck 1 has a corresponding coupling point 11, also known as a fifth wheel. Even though a towing truck 1 and a semi-trailer 2 is shown, the present invention is not limited to only this type of vehicle and vehicle combination, but may also be used for any other types of vehicles and vehicle combinations. For example, the vehicle combination may have more than one coupling point. As such, the invention is also applicable to e.g. so called Nordic combinations comprising a dolly in-between the vehicle and a trailer. As mentioned in the above, the invention is also applicable to e.g. buses, construction equipment, and also to passenger cars which are adapted to be connected to a connecting vehicle, such as a trailer.

The vehicle 1 comprises an image obtaining device 3. In the shown embodiment, the image obtaining device 3 is mounted at the rear of the vehicle 1, and at a position vertically below the coupling point 21 of the connecting vehicle 2. Thereby the image obtaining device 3 is able to identify and take images of a downwardly facing surface of the connecting vehicle 2 when it is at a specific distance from the connecting vehicle 2. As mentioned in the above, the image obtaining device 3 may be any type of device which can obtain an image, such as a camera, LIDAR and RADAR. Preferably the image obtaining device 3 is a camera which can identify markers of different patterns, colours etc.

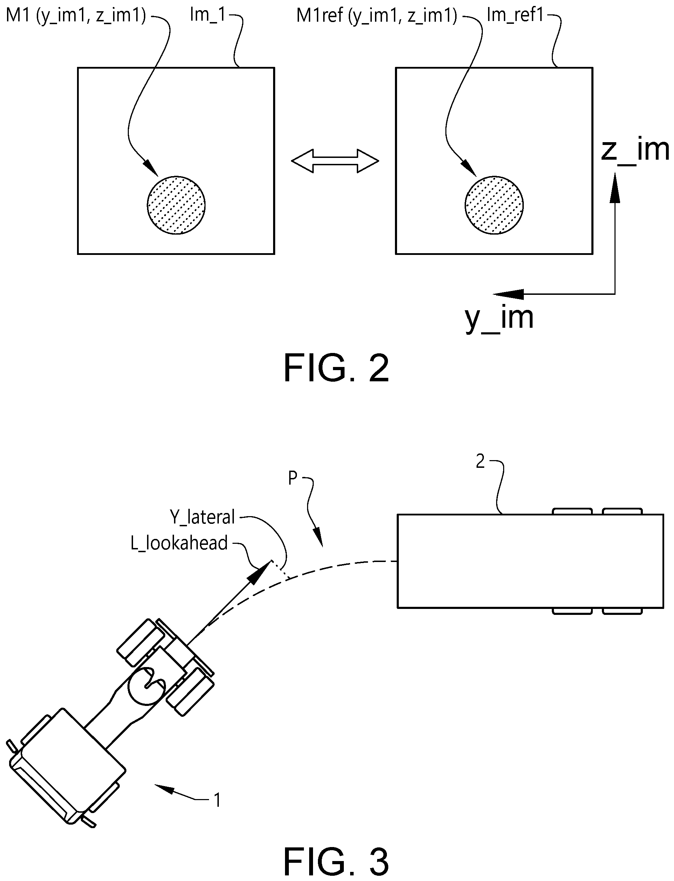

Fig. 2 shows schematic illustrations of two images, where the image Im_1 represents an image taken by the image obtaining device 3 of the vehicle 1 in the situation as shown in fig. 1a. The other image, Im_ref1, is a reference image which is matched with the obtained image Im_1 according to the present invention.

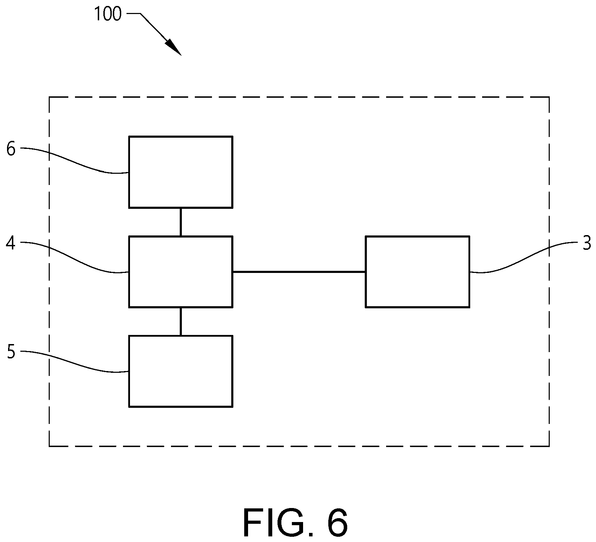

More particularly, with reference to especially figs. 1a and 2, a system 100 (see also fig. 6) for guiding the vehicle 1 towards the connecting vehicle 2 which is to be connected to the vehicle 1 according to an example embodiment of the present invention will be described.

The system 100 comprises the image obtaining device 3 which is mounted on the vehicle 1 for obtaining an image of the connecting vehicle 2. The system 100 is configured to:
- obtain an image Im_1 from the image obtaining device 3;
- in the obtained image Im_1, identify a marker M1 which is provided on the connecting vehicle 2;
- match the obtained image Im_1 with at least one reference image Im_ref1, wherein the reference image Im_ref1 contains a reference marker M1ref (see fig. 2) positioned at the same, or substantially the same, position as a position y_im1, z_im1 of the marker M1 in the obtained image Im_1, wherein the position of the reference marker M1ref in the at least one reference image Im_ref1 is associated with an actual stored location y1, z1, and wherein the actual stored location y1, z1 corresponds to an actual location of the marker M1 with respect to the vehicle 1; and wherein the system 100 is further configured to:
   - guide the vehicle 1 towards the connecting vehicle 2 by use of the actual stored location y1, z1.

The vehicle 1 and the connecting vehicle 2 are here provided in a space defined by a Cartesian coordinate system, where x is a direction in a longitudinal extension of the vehicle 1, y is a direction in a lateral extension of the vehicle 1 and z is a direction in a height extension of the vehicle 1. The obtained image Im_1 and the reference image Im_ref1 are two-dimensional and defined by two orthogonal axes, y_im and z_im. The axis y_im corresponds to the lateral direction y and the axis z_im corresponds to the height direction z as shown in fig. 1.

Accordingly, by finding a match of a reference marker M1ref in a reference image Im_ref1, i.e. where the position is the same, or substantially the same, it is possible to obtain an actual stored location y1, z1 which corresponds to the actual location of the connecting vehicle 2 in the situation shown in fig. 1.

The actual stored location may be obtained in that the at least one reference image Im_ref1 is obtained by taking an image by a reference image obtaining device (not shown), which image includes the reference marker M1ref, wherein the reference marker M1ref is located at a known location from the reference image obtaining device. Thereby, a position of the reference marker M1ref in the image can be associated with the known location, thereby providing the actual stored location. This may be done by e.g. providing a test environment, which may be a real and/or a virtual environment, where several reference images are obtained including reference markers provided at numerous different positions.

The actual stored location may also comprise an actual stored distance x1, associated with the longitudinal direction x in fig. 1a. The system 100 may thus be further configured to:
- match the obtained image Im_1 with at least one reference image Im_ref1, wherein the reference image contains a reference marker M1ref having the same, or substantially the same, size as a size marker_size of the marker in the obtained image, wherein the size of the reference marker M1ref in the at least one reference image Im_ref1 is associated with the actual stored distance x1, and wherein the actual stored distance x1 corresponds to an actual distance of the marker M1 with respect to the vehicle 1.

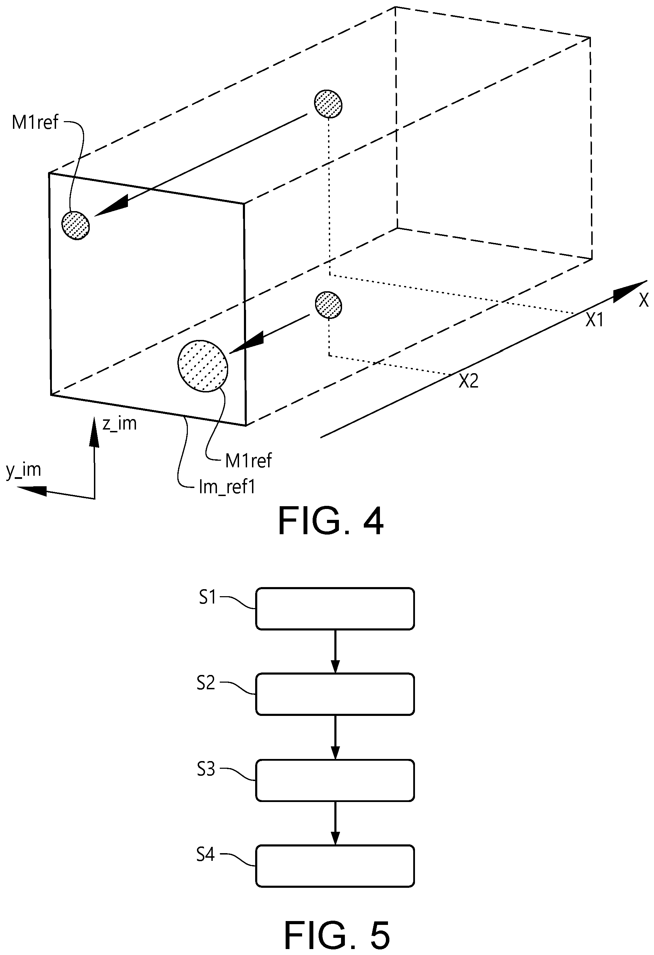

This principle is illustrated in fig. 4. More specifically, fig. 4 shows an example of an obtained reference image Im_ref1 which contains a marker M1ref positioned at a known location x1 or x2, where x2 is closer to the reference image obtaining device (not shown). Thereby, when the marker M1ref is positioned at the distance x2 from the reference image obtaining device, it will appear as larger in the image Im_ref1 compared to if it was positioned at the longer distance x1 from the reference image obtaining device. As such, by this approach the size marker_size of the marker M1ref in the reference image Im_ref1 can be correlated to the distance x1 or x2.

Additionally, or alternatively, the distance x1 may be determined by counting a number of pixels in the obtained image Im_1 in which the marker M1 is present, wherein the number of pixels is associated with the actual stored distance x1, wherein the actual stored distance corresponds to the actual distance of the marker M1 with respect to the vehicle 1.

The system 100 may be configured to identify a marker M1 which has at least one predetermined property, such as marker size, marker shape, marker pattern, marker colour etc. The markers M1 and M2 as shown in figs. 1a and 1b have different patterns recognizable by the image obtaining device 3 and the system 100.

The system 100 is during movement of the vehicle 1, i.e. during reversing as shown in e.g. fig. 1a, configured to continuously obtain images, identify the marker M1 in the obtained images and match the obtained images with reference images while the vehicle 1 is guided towards the connecting vehicle 2, thereby continuously updating the actual stored location used for guiding the vehicle 1 towards the connecting vehicle 2.

As an alternative, the system 100 and its image obtaining device 3 may be configured to identify different markers, i.e. the markers M1 and M2 as shown in figs. 1a and 1b, respectively. Accordingly, the system 100 may be configured to:
- in the obtained images, identify the at least two different markers M1, M2 on the connecting vehicle 2 while the vehicle 1 is guided towards the connecting vehicle 2, and wherein the system 100 is further configured to first guide the vehicle 1 towards the connecting vehicle by use the first marker M1, and to subsequently guide the vehicle 1 towards the connecting vehicle 2 by use of the second marker M2.

In particular, the system 100 may be configured to switch from guiding of the vehicle 1 by use of the first one to guiding of the vehicle by use of the second one of the two different markers M1, M2 when a predetermined condition is fulfilled, which predetermined condition is indicative of the vehicle 1 being located at a specific distance from the connecting vehicle 2. Thereby, the precision of the guiding can be increased when the vehicle 1 is guided towards the connecting vehicle 2 by use of the marker M2 which is located at a surface facing downwardly from the connecting vehicle 2. More specifically, the marker M2 is located closer to the coupling point 21 than the marker M1. M1, on the other hand, is easier to identify from longer distance. Thereby, the marker M1 is more suitable for guiding when the vehicle 1 is further away from the connecting vehicle 2.

In the embodiment shown in fig. 1b, the marker M2 is facing downwardly. However, in an alternative embodiment, the marker M2 provided on the downwardly facing surface may face in a direction towards the vehicle 1, i.e. in a direction corresponding to the x-axis. Thereby it may be easier for the image obtaining device 3 to identify the marker M2.

The system 100 may comprise and/or utilize a machine learning algorithm for continuously updating and/or adding actual stored locations of reference markers.

Preferably, the at least one reference image Im_ref1 is part of reference data comprising a plurality of reference images containing reference markers provided at different positions, wherein each position of the reference marker in the respective reference image is associated with actual stored locations. The reference data may comprise further actual stored locations, and/or the system may be configured to determine further actual stored locations by use of e.g. interpolation as mentioned in the above.

With reference to fig. 3, a schematic view of a vehicle 1 and a connecting vehicle 2 seen from above is shown where the vehicle 1 is guided along a path P towards the connecting vehicle 2. More specifically, the system 100 is further configured to determine the path P for the vehicle 1 towards the connecting vehicle 2 by use of the actual stored location z1, y1, x1, wherein the vehicle 1 is preferably guided towards the connecting vehicle 2 by use of a lateral distance Y-lateral between a look ahead point L_lookahead provided behind the vehicle 1 and the path P. The look ahead point L_lookahead is provided at a predetermined distance longitudinally behind the vehicle 1. Accordingly, by use of the determined path P and the look ahead point L_lookahead, the lateral distance Y-lateral between the look ahead point L_lookahead and a point on the path P can be determined. The point on the path P which is used is preferably a point which is closest to the look ahead point L_lookahead. Thereby, by use of the lateral distance Y_lateral, the vehicle 1 can be guided so that it follows the path P. For example, a guiding algorithm may be used which strives to reduce the lateral distance Y_lateral when the vehicle 1 is moved towards the connecting vehicle 2.

The path P shall preferably be laid out such that it is adapted to the geometry and characteristics of the vehicle 1. More specifically, the vehicle 1 may have certain limits, such as maximum possible steering radius, and thereby the path P is preferably adapted to such limits for the vehicle 1. The path P may also preferably be laid out such that the vehicle 1 reaches the connecting vehicle 2 with a suitable connecting angle, i.e. there may be a specific connecting angle range in which the vehicle 1 should be connected to the connecting vehicle 2.

The vehicle which is guided towards the connecting vehicle may already be connected to another vehicle (not shown) in front thereof and comprise an articulation joint therebetween. Accordingly, the vehicle may in an embodiment be a connected vehicle, such as a trailer, which is connected to e.g. a towing truck. In such embodiment, the vehicle is preferably guided towards the connecting vehicle 2 by adjusting the articulation angle of the articulation joint such that the vehicle follows the path P. The articulation angle is preferably adjusted by use of a lateral distance Y-lateral as described in the above. Accordingly, the system 100 may be configured to guide a vehicle combination towards a connected vehicle, wherein the guiding is performed by adjusting the articulation angle of the last coupled connected vehicle. In such embodiment, the image obtaining device is preferably mounted at a rearward facing surface of the last coupled connected vehicle.

Fig. 6 is a schematic and simplified illustration of a system 100 according to an example embodiment of the present invention. The system 100 comprises an image obtaining device 3 which is connected to a control unit 4. The control unit 4 is an electronic control unit comprising processing circuitry which is adapted to run a computer program as disclosed herein. The control unit 4 is configured to perform a method according to the fourth aspect of the present invention. The control unit 4 is preferably connected to a memory 5 comprising reference data as described herein, i.e. reference data comprising at least one reference image, wherein the control unit 4 uses the reference data for guiding the vehicle 1 towards the connecting vehicle 2. The control unit 4 may further be connected to a guiding unit 6. The guiding unit 6 may comprise steering actuators adapted to automatically steer the vehicle 1 towards the connecting vehicle 2. The steering actuators are connected to steerable ground engaging means, such as wheels of the vehicle 1. The guiding unit 6 may further comprise braking actuators for braking the vehicle 1 and/or a propulsion control actuator. Accordingly, the guiding of the vehicle 1 may be fully automatic, requiring no manual control of a driver of the vehicle 1. Alternatively or additionally, the vehicle 1 may be guided by providing guiding instructions to a driver of the vehicle 1, e.g. by displaying the guiding instructions on a display (not shown) for the driver. The guiding instructions may additionally/alternatively be audible and/or haptic instructions.

An example embodiment of a method is shown as a flowchart in fig. 5. The method comprises:
S1: obtaining an image Im_1 from the image obtaining device 3;
S2: in the obtained image, identifying a marker M1 which is provided on the connecting vehicle 2;
S3: matching the obtained image Im_1 with at least one reference image Im_ref1, wherein the reference image contains a reference marker M1ref positioned at the same, or substantially the same, position as a position z_im, y_im of the marker M1 in the obtained image, wherein the position of the reference marker M1ref in the at least one reference image Im_ref1 is associated with an actual stored location z1, y1, and wherein the actual stored location corresponds to an actual location of the marker M1 with respect to the vehicle 1; and S4: guiding the vehicle 1 towards the connecting vehicle 2 by use of the information of the actual stored location.

According to the invention, the system 100 is also configured to adjust a height of the vehicle 1 and/or of the connecting vehicle 2 based on the actual stored location such that the coupling point 11 is adjusted to a height corresponding to the height of the coupling point 21 on the connecting vehicle 2. This may be done once the vehicle 1 is provided at a predetermined distance from the connecting vehicle 2. Thereby a further improved connection may be achieved, where the driver does not need to e.g. manually adjust the height of the vehicle 1 before connection.

It is to be understood that the present invention is not limited to the embodiments described above and illustrated in the drawings; rather, the skilled person will recognize that many changes and modifications may be made within the scope of the appended claims.

## Claims

1. A system (100) for guiding a vehicle (1) towards a connecting vehicle (2) which is to be connected to the vehicle (1), wherein the vehicle (1) comprises a coupling point (11) and the connecting vehicle (2) comprises a coupling point (21), the system comprising:
- an image obtaining device (3) configured to be mounted on the vehicle (1) for obtaining an image of the connecting vehicle (2), wherein the system (100) is configured to:
- obtain an image (Im_1) from the image obtaining device (3);
- in the obtained image, identify a marker (M1) which is provided on the connecting vehicle (2);
- match the obtained image (Im_1) with at least one reference image (Im_ref1), wherein the reference image (Im_ref1) contains a reference marker (M1ref) positioned at the same, or substantially the same, position as a position (y_im1, z_im1) of the marker (M1) in the obtained image (Im_1), wherein the position of the reference marker (M1ref) in the at least one reference image (Im_ref1) is associated with an actual stored location (y1, z1), and wherein the actual stored location (y1, z1) corresponds to an actual location of the marker (M1) with respect to the vehicle (1); and wherein the system (100) is further configured to:
- guide the vehicle (1) towards the connecting vehicle (2) by use of the actual stored location (y1, z1), **characterized in that**
the system (100) is further configured to adjust a height of the vehicle (1) and/or of the connecting vehicle (2) based on the actual stored location such that the coupling point (11) of the vehicle (1) is adjusted to a height corresponding to the height of the coupling point (21) on the connecting vehicle (2).

2. The system (100) according to claim 1, wherein the actual stored location comprises an actual stored distance (x1), and wherein the system is further configured to:
- match the obtained image (Im_1) with at least one reference image (Im_ref1), wherein the reference image contains a reference marker (M1ref) having the same, or substantially the same, size as a size (marker_size) of the marker in the obtained image, wherein the size of the reference marker (M1ref) in the at least one reference image (Im_ref1) is associated with the actual stored distance (x1), and wherein the actual stored distance (x1) corresponds to an actual distance of the marker (M1) with respect to the vehicle (1); and/or;
- count a number of pixels in the obtained image (Im_1) in which the marker (M1) is present, wherein the number of pixels is associated with the actual stored distance (x1), wherein the actual stored distance corresponds to the actual distance of the marker (M1) with respect to the vehicle (1).

3. The system (100) according to any one of the preceding claims, wherein the system is configured to identify a marker having at least one predetermined property, such as marker size, marker shape, marker pattern, marker colour etc.

4. The system (100) according to any one of the preceding claims, wherein the system is configured to continuously obtain images, identify the marker in the obtained images and match the obtained images with reference images while the vehicle is guided towards the connecting vehicle, thereby continuously updating the actual stored location used for guiding the vehicle towards the connecting vehicle.

5. The system (100) according to claim 4, wherein the system is configured to:
- in the obtained images, identify at least two different markers (M1, M2) on the connecting vehicle while the vehicle is guided towards the connecting vehicle, and wherein the system is further configured to first guide the vehicle towards the connecting vehicle by use of a first one (M1) of the at least two different markers, and to subsequently guide the vehicle towards the connecting vehicle by use of a second one (M2) of the at least two different markers.

6. The system (100) according to claim 5, wherein the system is configured to switch from guiding of the vehicle by use of the first one to guiding of the vehicle by use of the second one of the at least two different markers when a predetermined condition is fulfilled, which predetermined condition is indicative of the vehicle being located at a specific distance from the connecting vehicle.

7. The system (100) according to any one of the preceding claims, wherein the at least one reference image is obtained by taking an image by a reference image obtaining device, which image includes the reference marker, wherein the reference marker is located at a known location from the reference image obtaining device, wherein a position of the reference marker in the image is associated with the known location, thereby providing the actual stored location.

8. The system (100) according to any one of the preceding claims, wherein the system comprises and/or utilizes a machine learning algorithm for continuously updating and/or adding actual stored locations of reference markers.

9. The system (100) according to any one of the preceding claims, wherein the at least one reference image is part of reference data comprising a plurality of reference images containing reference markers provided at different positions, wherein each position of the reference marker in the respective reference image is associated with an actual stored location (y1, z1, x1) .

10. The system (100) according to any one of the preceding claims, wherein the system is configured to determine a path for the vehicle towards the connecting vehicle by use of the actual stored location, wherein the vehicle is preferably guided towards the connecting vehicle by use of a lateral distance between a look ahead point provided behind the vehicle and the path.

11. A vehicle (1) comprising the system (100) according to any one of the preceding claims.

12. A vehicle combination comprising the vehicle (1) according to claim 11 and a connecting vehicle (2), wherein the connecting vehicle (2) comprises at least one marker (M1, M2) identifiable by the image obtaining device (3).

13. The vehicle combination according to claim 12, wherein the connecting vehicle (2) comprises at least two different markers (M1, M2).

14. The vehicle combination according to claim 13, wherein one of the markers (M1) is provided at a front side face of the connecting vehicle (2) proximate a coupling point (21) for the vehicle (1), and a second one of the markers (M2) is provided at a downwardly facing surface of the connecting vehicle (2) proximate the coupling point (21).

15. A method for guiding a vehicle (2) towards a connecting vehicle (2) which is to be connected to the vehicle (1), wherein the vehicle (1) comprises an image obtaining device (3) configured to be mounted on the vehicle for obtaining an image of the connecting vehicle, and wherein the vehicle (1) comprises a coupling point (11) and the connecting vehicle (2) comprises a coupling point (21), wherein the method comprises:
- obtaining (S1) an image (Im_1) from the image obtaining device (3);
- in the obtained image, identifying (S2) a marker (M2) which is provided on the connecting vehicle (2);
- matching (S3) the obtained image (Im_1) with at least one reference image (Im_ref1), wherein the reference image contains a reference marker (M1ref) positioned at the same, or substantially the same, position as a position (y_im1, z_im1) of the marker in the obtained image, wherein the position of the reference marker in the at least one reference image is associated with an actual stored location (y1, z1), and wherein the actual stored location corresponds to an actual location of the marker with respect to the vehicle; and wherein the method further comprises:
- guiding (S4) the vehicle (1) towards the connecting vehicle (2) by use of the information of the actual stored location, **characterized in that** the method further comprises:
- adjusting a height of the vehicle (1) and/or of the connecting vehicle (2) based on the actual stored location such that the coupling point (11) of the vehicle (1) is adjusted to a height corresponding to the height of the coupling point (21) on the connecting vehicle (2).

16. A computer program comprising program code means for performing the steps of claim 15 when said program is run on a computer.

17. A computer readable medium carrying a computer program comprising program code means for performing the steps of claim 15 when said program product is run on a computer.

18. A control unit (4) for controlling a vehicle (1), the control unit being configured to perform the steps of the method according to claim 15.

## Patentansprüche

1. System (100) zum Führen eines Fahrzeugs (1) zu einem mit dem Fahrzeug (1) zu verbindenden Verbindungsfahrzeug (2), wobei das Fahrzeug (1) einen Kupplungspunkt (11) und das Verbindungsfahrzeug (2) einen Kupplungspunkt (21) umfasst, das System umfassend:
- eine Bildaufnahmevorrichtung (3), die konfiguriert ist, um an dem Fahrzeug (1) angebracht zu werden, um ein Bild des Verbindungsfahrzeugs (2) zu erhalten, wobei das System (100) konfiguriert ist, um:
- ein Bild (Im_1) von der Bildaufnahmevorrichtung (3) zu erhalten;
- im erhaltenen Bild eine Markierung (M1) zu erkennen, die sich auf dem Verbindungsfahrzeug (2) befindet;
- das erhaltene Bild (Im_1) mit mindestens einem Referenzbild (Im_ref1) abzugleichen, wobei das Referenzbild (Im_ref1) eine Referenzmarkierung (M1ref) enthält, die an der gleichen oder im Wesentlichen der gleichen Position wie eine Position (y_im1, z_im1) der Markierung (M1) im erhaltenen Bild (Im_1) angeordnet ist, wobei die Position der Referenzmarkierung (M1ref) im mindestens einen Referenzbild (Im _ref1) mit einer tatsächlichen gespeicherten Position (y1, z1) verbunden ist, und wobei die tatsächliche gespeicherte Position (y1, z1) einer tatsächlichen Position der Markierung (M1) in Bezug auf das Fahrzeug (1) entspricht; und wobei das System (100) ferner konfiguriert ist, um:
- das Fahrzeug (1) unter Verwendung der tatsächlichen gespeicherten Position (y1, z1) zum Verbindungsfahrzeug (2) zu führen, **dadurch gekennzeichnet, dass**
das System (100) ferner konfiguriert ist, um eine Höhe des Fahrzeugs (1) und/oder des Verbindungsfahrzeugs (2) auf der Grundlage der tatsächlichen gespeicherten Position so einzustellen, dass der Kupplungspunkt (11) des Fahrzeugs (1) auf eine Höhe eingestellt wird, die der Höhe des Kupplungspunkts (21) am Verbindungsfahrzeug (2) entspricht.

2. System (100) nach Anspruch 1, wobei die tatsächliche gespeicherte Position einen tatsächlichen gespeicherten Abstand (x1) umfasst, und wobei das System ferner konfiguriert ist, um:
- das erhaltene Bild (Im_1) mit mindestens einem Referenzbild (Im_ref1) abzugleichen, wobei das Referenzbild eine Referenzmarkierung (M1ref) enthält, die die gleiche oder im Wesentlichen die gleiche Größe wie eine Größe (marker_size) der Markierung im erhaltenen Bild aufweist, wobei die Größe der Referenzmarkierung (M1ref) im mindestens einen Referenzbild (Im _ref1) mit dem tatsächlichen gespeicherten Abstand (x1) verbunden ist, und wobei der tatsächliche gespeicherte Abstand (x1) einem tatsächlichen Abstand der Markierung (M1) in Bezug auf das Fahrzeug (1) entspricht; und/oder;
- eine Vielzahl von Pixeln im erhaltenen Bild (Im_1) zu zählen, in dem die Markierung (M1) vorhanden ist, wobei die Anzahl von Pixeln mit dem tatsächlichen gespeicherten Abstand (x1) verbunden ist, wobei der tatsächliche gespeicherte Abstand dem tatsächlichen Abstand der Markierung (M1) in Bezug auf das Fahrzeug (1) entspricht.

3. System (100) nach einem der vorhergehenden Ansprüche, wobei das System konfiguriert ist, um eine Markierung zu erkennen, die mindestens eine vorbestimmte Eigenschaft aufweist, wie z. B. Markierungsgröße, Markierungsform, Markierungsmuster, Markierungsfarbe usw.

4. System (100) nach einem der vorhergehenden Ansprüche, wobei das System konfiguriert ist, um kontinuierlich Bilder zu erhalten, die Markierung in den erhaltenen Bildern erkennt und die erhaltenen Bilder mit Referenzbildern abgleicht, während das Fahrzeug zum Verbindungsfahrzeug geführt wird, wodurch die tatsächliche gespeicherte Position, die zum Führen des Fahrzeugs zum Verbindungsfahrzeug verwendet wird, kontinuierlich aktualisiert wird.

5. System (100) nach Anspruch 4, wobei das System konfiguriert ist, um:
- in den erhaltenen Bildern mindestens zwei verschiedene Markierungen (M1, M2) auf dem Verbindungsfahrzeug zu erkennen, während das Fahrzeug zum Verbindungsfahrzeug geführt wird, und wobei das System ferner konfiguriert ist, um zunächst das Fahrzeug unter Verwendung einer ersten (M1) der mindestens zwei verschiedenen Markierungen zum Verbindungsfahrzeug zu führen und anschließend das Fahrzeug unter Verwendung einer zweiten (M2) der mindestens zwei verschiedenen Markierungen zum Verbindungsfahrzeug zu führen.

6. System (100) nach Anspruch 5, wobei das System konfiguriert ist, um von der Führung des Fahrzeugs unter Verwendung der ersten Markierung auf die Führung des Fahrzeugs unter Verwendung der zweiten Markierung der mindestens zwei verschiedenen Markierungen umzuschalten, wenn eine vorbestimmte Bedingung erfüllt ist, wobei die vorbestimmte Bedingung anzeigt, dass sich das Fahrzeug in einem bestimmten Abstand zum Verbindungsfahrzeug befindet.

7. System (100) nach einem der vorhergehenden Ansprüche, wobei das mindestens eine Referenzbild durch Aufnahme eines Bildes durch eine Referenzbild-Bildaufnahmevorrichtung erhalten wird, wobei das Bild die Referenzmarkierung enthält, wobei die Referenzmarkierung an einer bekannten Position von der Referenzbild-Bildaufnahmevorrichtung angeordnet ist, wobei eine Position der Referenzmarkierung im Bild mit der bekannten Position verbunden ist, wodurch die tatsächliche gespeicherte Position bereitgestellt wird.

8. System (100) nach einem der vorhergehenden Ansprüche, wobei das System einen Algorithmus für maschinelles Lernen zur kontinuierlichen Aktualisierung und/oder Hinzufügung tatsächlicher gespeicherter Positionen von Referenzmarkern umfasst und/oder verwendet.

9. System (100) nach einem der vorhergehenden Ansprüche, wobei das mindestens eine Referenzbild Teil von Referenzdaten ist, die mehrere Referenzbilder umfassen, die an verschiedenen Positionen vorgesehene Referenzmarker enthalten, wobei jede Position des Referenzmarkers im jeweiligen Referenzbild mit einer tatsächlichen gespeicherten Position (y1, z1, x1) verbunden ist.

10. System (100) nach einem der vorhergehenden Ansprüche, wobei das System konfiguriert ist, um einen Pfad für das Fahrzeug in Richtung des Verbindungsfahrzeugs unter Verwendung der tatsächlichen gespeicherten Position zu bestimmen, wobei das Fahrzeug vorzugsweise unter Verwendung eines seitlichen Abstands zwischen einem hinter dem Fahrzeug vorgesehenen Vorausblickpunkt und dem Pfad in Richtung des Verbindungsfahrzeugs geführt wird.

11. Fahrzeug (1), umfassend das System (100) nach einem der vorhergehenden Ansprüche.

12. Fahrzeugkombination umfassend das Fahrzeug (1) nach Anspruch 11 und ein Verbindungsfahrzeug (2), wobei das Verbindungsfahrzeug (2) mindestens eine durch die Bildaufnahmevorrichtung (3) erkennbare Markierung (M1, M2) umfasst.

13. Fahrzeugkombination nach Anspruch 12, wobei das Verbindungsfahrzeug (2) mindestens zwei unterschiedliche Markierungen (M1, M2) umfasst.

14. Fahrzeugkombination nach Anspruch 13, wobei eine der Markierungen (M1) an einer vorderen Seitenfläche des Verbindungsfahrzeugs (2) in der Nähe eines Kupplungspunkts (21) für das Fahrzeug (1) vorgesehen ist und eine zweite der Markierungen (M2) an einer nach unten weisenden Oberfläche des Verbindungsfahrzeugs (2) in der Nähe des Kupplungspunkts (21) vorgesehen ist.

15. Verfahren zum Führen eines Fahrzeugs (2) zu einem mit dem Fahrzeug (1) zu verbindenden Verbindungsfahrzeug (2) wobei das Fahrzeug (1) eine Bildaufnahmevorrichtung (3) umfasst, die konfiguriert ist, um an dem Fahrzeug angebracht zu werden, um ein Bild des Verbindungsfahrzeugs zu erhalten, und wobei das Fahrzeug (1) einen Kupplungspunkt (11) umfasst und das Verbindungsfahrzeug (2) einen Kupplungspunkt (21) umfasst, wobei das Verfahren umfasst:
- Erhalten (S1) eines Bildes (Im_1) von der Bildaufnahmevorrichtung (3);
- Erkennen (S2) einer Markierung (M2) im erhaltenen Bild, die sich auf dem Verbindungsfahrzeug (2) befindet;
- Abgleichen (S3) des erhaltenen Bildes (Im_1) mit mindestens einem Referenzbild (Im_ref1), wobei das Referenzbild eine Referenzmarkierung (M1ref) enthält, die an der gleichen oder im Wesentlichen der gleichen Position wie eine Position (y_im1, z_im1) der Markierung im erhaltenen Bild angeordnet ist, wobei die Position der Referenzmarkierung im mindestens einen Referenzbild mit einer tatsächlichen gespeicherten Position (y1, z1) verbunden ist, und wobei die tatsächliche gespeicherte Position einer tatsächlichen Position der Markierung in Bezug auf das Fahrzeug entspricht; und wobei das Verfahren ferner umfasst:
- Führen (S4) des Fahrzeugs (1) zum Verbindungsfahrzeug (2) unter Verwendung der Information über die tatsächliche gespeicherte Position, **dadurch gekennzeichnet, dass** das Verfahren ferner umfasst:
- Einstellen einer Höhe des Fahrzeugs (1) und/oder des Verbindungsfahrzeugs (2) auf der Grundlage der tatsächlichen gespeicherten Position, so dass der Kupplungspunkt (11) des Fahrzeugs (1) auf eine Höhe eingestellt wird, die der Höhe des Kupplungspunkts (21) am Verbindungsfahrzeug (2) entspricht.

16. Computerprogramm mit Programmcodemitteln zur Durchführung der Schritte nach Anspruch 15, wenn das Programm auf einem Computer ausgeführt wird.

17. Computerlesbares Medium, das ein Computerprogramm mit Programmcodemitteln zum Durchführen der Schritte nach Anspruch 15 umfasst, wenn das Programmmittel auf einem Computer ausgeführt wird.

18. Steuereinheit (4) zur Steuerung eines Fahrzeugs (1), wobei die Steuereinheit konfiguriert ist, um die Schritte des Verfahrens nach Anspruch 15 durchzuführen.

## Revendications

1. Système (100) de guidage d'un véhicule (1) vers un véhicule de connexion (2) qui doit être raccordé au véhicule (1), dans lequel le véhicule (1) comprend un point d'attelage (11) et le véhicule de connexion (2) comprend un point d'attelage (21), le système comprenant :
- un dispositif d'obtention d'image (3) configuré pour être monté sur le véhicule (1) pour obtenir une image du véhicule de connexion (2), le système (100) étant configuré pour :
- obtenir une image (Im_1) à partir du dispositif d'obtention d'image (3) ;
- dans l'image obtenue, identifier un marqueur (M1) qui est prévu sur le véhicule de connexion (2) ;
- comparer l'image obtenue (Im_1) avec au moins une image de référence (Im_ref1), l'image de référence (Im_ref1) contenant un marqueur de référence (M1ref) positionné à la même position ou sensiblement à la même position qu'une position (y_im1, z_im1) du marqueur (M1) dans l'image obtenue (Im_1), la position du marqueur de référence (M1ref) dans l'au moins une image de référence (Im_ref1) étant associée à un emplacement mémorisé réel (y1, z1), et l'emplacement mémorisé réel (y1, z1) correspondant à un emplacement réel du marqueur (M1) par rapport au véhicule (1) ; et le système (100) étant en outre configuré pour :
- guider le véhicule (1) vers le véhicule de connexion (2) en utilisant l'emplacement mémorisé réel (y1, z1), **caractérisé en ce que**
le système (100) est en outre configuré pour régler une hauteur du véhicule (1) et/ou du véhicule de connexion (2) sur la base de l'emplacement mémorisé réel, de sorte que le point d'attelage (11) du véhicule (1) soit réglé à une hauteur correspondant à la hauteur du point d'attelage (21) sur le véhicule de connexion (2).

2. Système (100) selon la revendication 1, dans lequel l'emplacement mémorisé réel comprend une distance mémorisée réelle (x1), et le système est en outre configuré pour :
- faire correspondre l'image obtenue (Im_1) avec au moins une image de référence (Im_ref1), l'image de référence contenant un marqueur de référence (M1ref) ayant la même taille ou sensiblement la même taille que la taille (marker_size) du marqueur dans l'image obtenue, la taille du marqueur de référence (M1ref) dans l'au moins une image de référence (Im_ref1) étant associée à la distance réelle mémorisée (x1), et la distance réelle mémorisée (x1) correspondant à une distance réelle du marqueur (M1) par rapport au véhicule (1) ; et/ou
- compter un nombre de pixels dans l'image obtenue (Im_1) dans laquelle le marqueur (M1) est présent, le nombre de pixels étant associé à la distance réelle mémorisée (x1), la distance réelle mémorisée correspondant à la distance réelle du marqueur (M1) par rapport au véhicule (1).

3. Système (100) selon l'une quelconque des revendications précédentes, le système étant configuré pour identifier un marqueur ayant au moins une propriété prédéterminée, comme une taille de marqueur, une forme de marqueur, un motif de marqueur, une couleur de marqueur, etc.

4. Système (100) selon l'une quelconque des revendications précédentes, le système étant configuré pour obtenir des images, identifier le marqueur dans les images obtenues en continu et faire correspondre les images obtenues avec des images de référence tandis que le véhicule est guidé vers le véhicule de connexion, mettant ainsi à jour en continu l'emplacement mémorisé réel utilisé pour guider le véhicule vers le véhicule de connexion.

5. Système (100) selon la revendication 4, le système étant configuré pour :
- dans les images obtenues, identifier au moins deux marqueurs différents (M1, M2) sur le véhicule de connexion pendant que le véhicule est guidé vers le véhicule de connexion, et le système étant en outre conçu pour guider d'abord le véhicule vers le véhicule de connexion au moyen d'un premier (M1) des au moins deux marqueurs différents, et pour guider ensuite le véhicule vers le véhicule de connexion au moyen d'un second marqueur (M2) parmi au moins deux marqueurs différents.

6. Système (100) selon la revendication 5, le système étant configuré pour passer du guidage du véhicule par l'utilisation du premier au guidage du véhicule par l'utilisation du second des au moins deux marqueurs différents lorsqu'une condition prédéterminée est remplie,
ledit état prédéterminé indiquant que le véhicule se trouve à une distance spécifique du véhicule de connexion.

7. Système (100) selon l'une quelconque des revendications précédentes, dans lequel l'au moins une image de référence est obtenue en prenant une image par un dispositif d'obtention d'image de référence, laquelle image comprend le marqueur de référence, le marqueur de référence étant situé à un emplacement connu de par le dispositif d'obtention d'image de référence, une position du marqueur de référence dans l'image étant associée à l'emplacement connu, en établissant ainsi l'emplacement mémorisé réel.

8. Système (100) selon l'une quelconque des revendications précédentes, le système comprenant et/ou utilisant un algorithme d'apprentissage automatique pour mettre à jour et/ou ajouter en continu des emplacements mémorisés réels de marqueurs de référence.

9. Système (100) selon l'une quelconque des revendications précédentes, dans lequel l'au moins une image de référence fait partie de données de référence comprenant une pluralité d'images de référence contenant des marqueurs de référence prévus à différentes positions, chaque position du marqueur de référence dans l'image de référence respective étant associée à un emplacement mémorisé réel (y1, z1, x1).

10. Système (100) selon l'une quelconque des revendications précédentes, le système étant configuré pour déterminer un trajet pour le véhicule vers le véhicule de connexion en utilisant l'emplacement mémorisé réel, le véhicule étant de préférence guidé vers le véhicule de connexion en utilisant une distance latérale entre un point avant prévu derrière le véhicule et le trajet.

11. Véhicule (1) comprenant le système (100) selon l'une quelconque des revendications précédentes.

12. Combinaison de véhicules comprenant le véhicule (1) selon la revendication 11 et un véhicule de connexion (2), dans laquelle le véhicule de connexion (2) comprend au moins un marqueur (M1, M2) identifiable par le dispositif d'obtention d'image (3).

13. Combinaison de véhicules selon la revendication 12, dans laquelle le véhicule de connexion (2) comprend au moins deux marqueurs différents (M1, M2).

14. Combinaison de véhicules selon la revendication 13, dans laquelle l'un des marqueurs (M1) est prévu sur une face latérale avant du véhicule de connexion (2) à proximité d'un point d'attelage (21) pour le véhicule (1), et un second des marqueurs (M2) est prévu sur une surface tournée vers le bas du véhicule de connexion (2) à proximité du point d'attelage (21).

15. Procédé de guidage d'un véhicule (2) vers un véhicule de connexion (2) qui doit être raccordé au véhicule (1), dans lequel le véhicule (1) comprend un dispositif d'obtention d'image (3) configuré pour être monté sur le véhicule afin d'obtenir une image du véhicule de connexion, et dans lequel le véhicule (1) comprend un point d'attelage (11) et le véhicule de connexion (2) comprend un point d'attelage (21), le procédé comprenant :
- l'obtention (S1) d'une image (Im_1) à partir du dispositif d'obtention d'image (3) ;
- dans l'image obtenue, l'identification (S2) d'un marqueur (M2) qui est prévu sur le véhicule de connexion (2) ;
- la comparaison (S3) de l'image obtenue (Im_1) avec au moins une image de référence (Im_ref1), l'image de référence contenant un marqueur de référence (M1ref) positionné à la même position ou sensiblement à la même position qu'une position (y_im1, z_im1) du marqueur dans l'image obtenue, la position du marqueur de référence dans l'au moins une image de référence étant associée à un emplacement mémorisé réel (y1, z1), et l'emplacement mémorisé réel correspondant à un emplacement mémorisé réel du marqueur par rapport au véhicule ; et le procédé comprenant en outre :
- le guidage (S4) du véhicule (1) vers le véhicule de connexion (2) en utilisant les informations de l'emplacement mémorisé réel, **caractérisé en ce que** le procédé comprend en outre :
- le réglage de la hauteur du véhicule (1) et/ou du véhicule de connexion (2) en fonction de l'emplacement mémorisé réel de telle sorte que le point d'attelage (11) du véhicule (1) soit réglé à une hauteur correspondant à la hauteur du point d'attelage (21) sur le véhicule de connexion (2).

16. Programme informatique comprenant un moyen de code de programme pour exécuter les étapes de la revendication 15 lorsque ledit programme est exécuté sur un ordinateur.

17. Support lisible par ordinateur comportant un programme informatique comprenant un moyen de code de programme pour exécuter les étapes de la revendication 15 lorsque ledit produit de programmation est exécuté sur un ordinateur.

18. Unité de commande (4) pour commander un véhicule (1), l'unité de commande étant configurée pour exécuter les étapes du procédé selon la revendication 15.
